# EUROPEAN PATENT APPLICATION

(11) **EP 2 782 231 A1**
(43) Date of publication of application: **24.09.2014**
(21) Application number: 13160180.9
(22) Date of filing: 20.03.2013
(51) Int. Cl.: H02K 53/00

(54) **Eco-friendly electric-generating apparatus with power-multiplying gear mechanisms**

(71) Applicant: Liu, Ping-Chih, Taipei City 10671, Taiwan (TW); Chen, Rong, Taipei City 10671, Taiwan (TW)
(72) Inventor: Liu, Ping-Chih, Taipei City 10671, Taiwan (TW); Chen, Rong, Taipei City 10671, Taiwan (TW)
(74) Representative: Reboussin, Yohann Mickaël Noël

(57) **Abstract**

The purpose of the present invention is to provide a low-cost, easy-to-set-up and eco-friendly electric-generating apparatus with power-multiplying gear mechanism. Its technical methods comprises of: an electric-generating apparatus and a base, with the electric-generating apparatus consisting of a drive gear, a driving motor, a transmission gear, a generator, and a control box. The biggest advantage the present invention has following this application has is that when generating electricity, aside from partial outside-energy, it can use a small part of its self-made energy to generate electricity, making its generating cost following its installment cheap with no other costs required aside from maintenance fees and salary payment for the management crew The present invention, following its installment, can have a lifespan that would last decades, with little space required and completely unaffected by climate elements. As a green electric-generating apparatus with no pollution, it completely fits the ideal of eco-friendly electric-generating.

## Description

### FIELD OF THE INVENTION

The present invention involves a certain kind of electric-generating apparatus, particularly to an electric-generating apparatus with power-multiplying gear mechanisms.

### BACKGROUND OF THE INVENTION

The modem human's life is inseparable from electricity. A lack of electricity or blackout occurrence would definitely cause inconvenience and discomfort, and with the world's resources rapidly depleting due to the world population's exploding growth, a sense of energy crisis has been felt.

Present electric-generating methods are listed as follows: fuel-powered generating, gas-burning generating, nuclear generating, hydro-electric generating, and wind generating etc. Each generating method, however, have their own faults as well as problems of unstable electric generating.

In response, the invention of an eco-friendly and cheap electric-generating apparatus to resolve the faults of the aforementioned electric-generating methods and provide stable electric-generating to satisfy mankind's needs for electricity and eco-friendly requirement, has become the main purpose the present invention intends to improve.

### SUMMARY OF THE INVENTION

The purpose of the present invention is to provide a low-cost, easy-to-set-up and eco-friendly electric-generating apparatus with power-multiplying gear mechanisms.

To approach the purpose, the present invention was finally thought of after years of researching and deliberating. The technical methods applied in the present invention are executed as following, which reveals an eco-friendly electric generating apparatus with power-multiplying gear mechanisms, comprising:
At least one electric-generating apparatus, and
At least one base that is used to support and store said electric-generating apparatus.

Said apparatus is activated by:
A drive gear disposed on said base.
A driving motor, which is disposed on the base, and connected to said drive gear by axis for propelling said drive gear on the base.
A transmission gear, which is disposed on the base that can be driven by said drive gear, as its teeth are more than said drive gear's.
A generator which is disposed on the base, that is connected to and propelled by said transmission gear on the base by axis, to generate electricity simultaneously.
A control box is electronically connected with the driving motor and generator to control their operations.

The present invention, through the application of the electric-generating apparatus with power enlarging gear mechanisms using the lever principle theory that multiplies power from 1 to more, can produce more electricity. All costs of generating, aside from necessary production costs as well as maintenance fees, are relatively cheap. The simple mechanical structure allows the apparatus to operate for a long time, with its whole size not affected by topography, making it applicable on any place in need of electricity and saving the cost of setting up electric-wires. The generating apparatus is applicable for all kinds of factories with its electric-generating abilities unaffected by blackouts.

### BRIEF DESCRIPTION OF DRAWINGS

Fig.1: A 3-D diagram of the present invention.

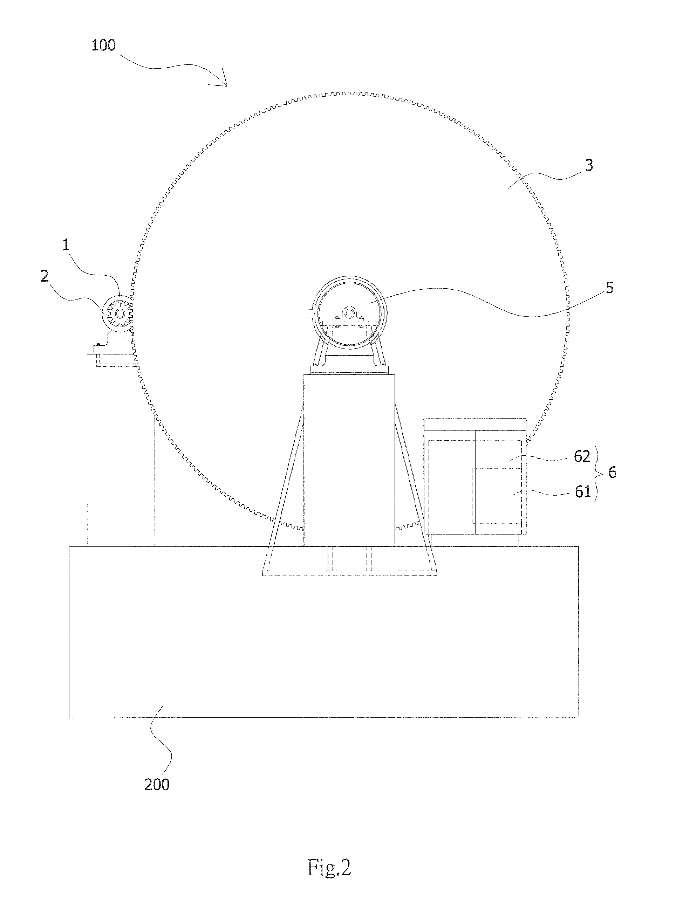

Fig.2: A side view of what is shown in Fig.1.

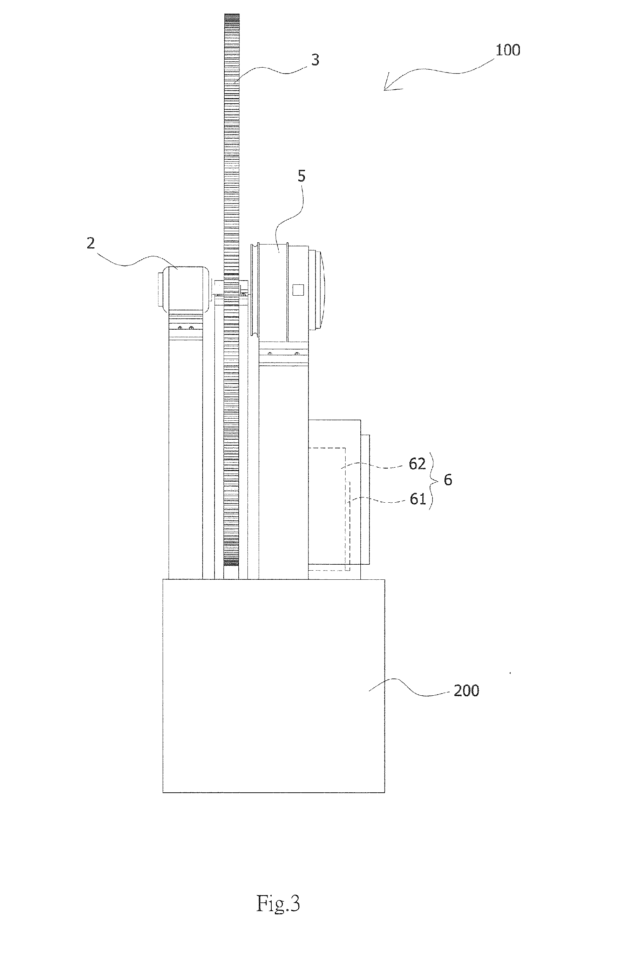

Fig.3: A front view of what is shown in Fig.1.

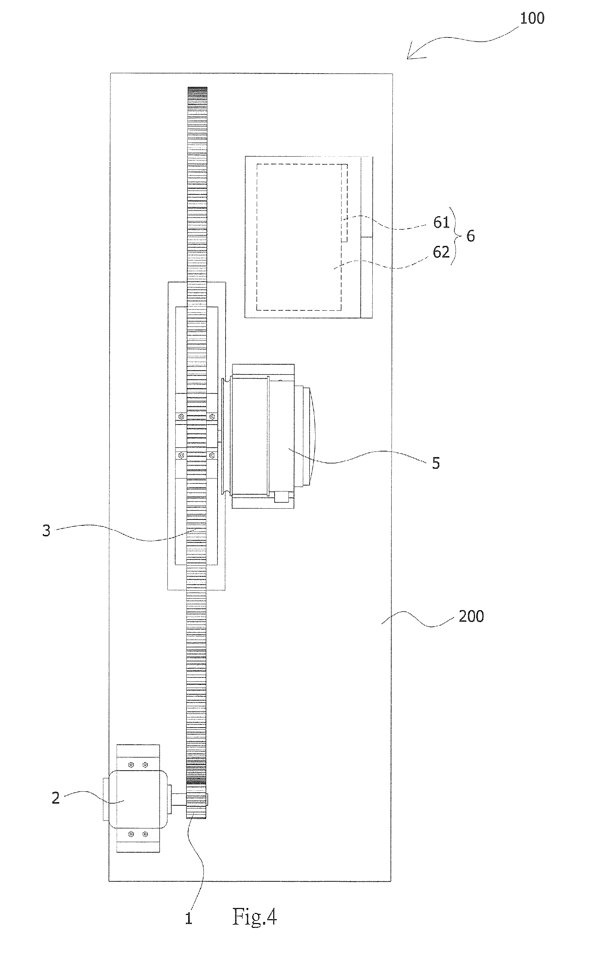

Fig.4: A top view of what is shown in Fig.1,
Fig.5: A 3-D diagram for showing the practicing of the present invention.

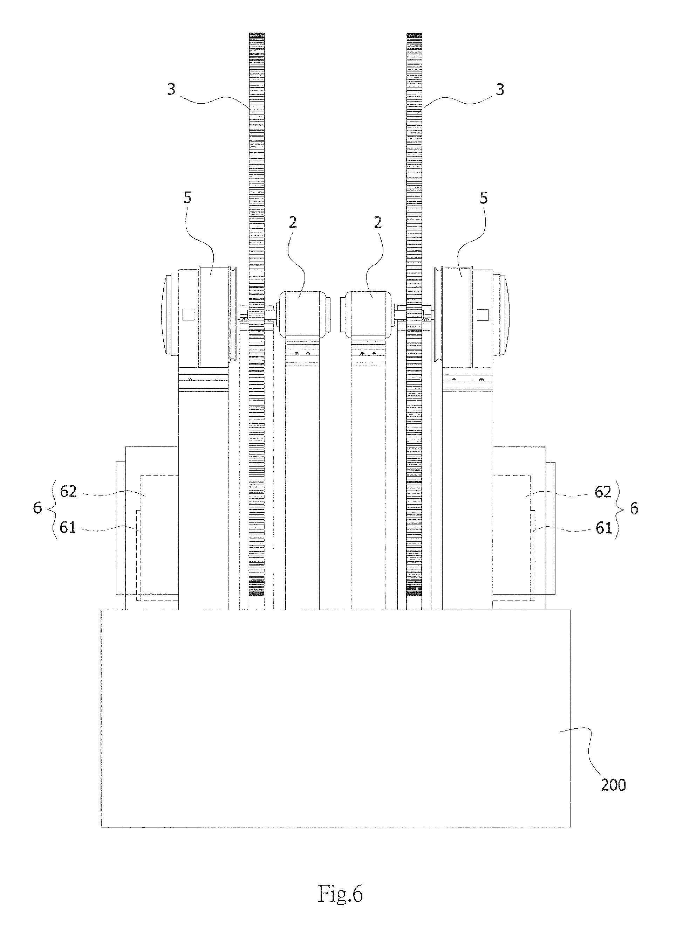

Fig.6: A front view of what is shown in Fig.5.

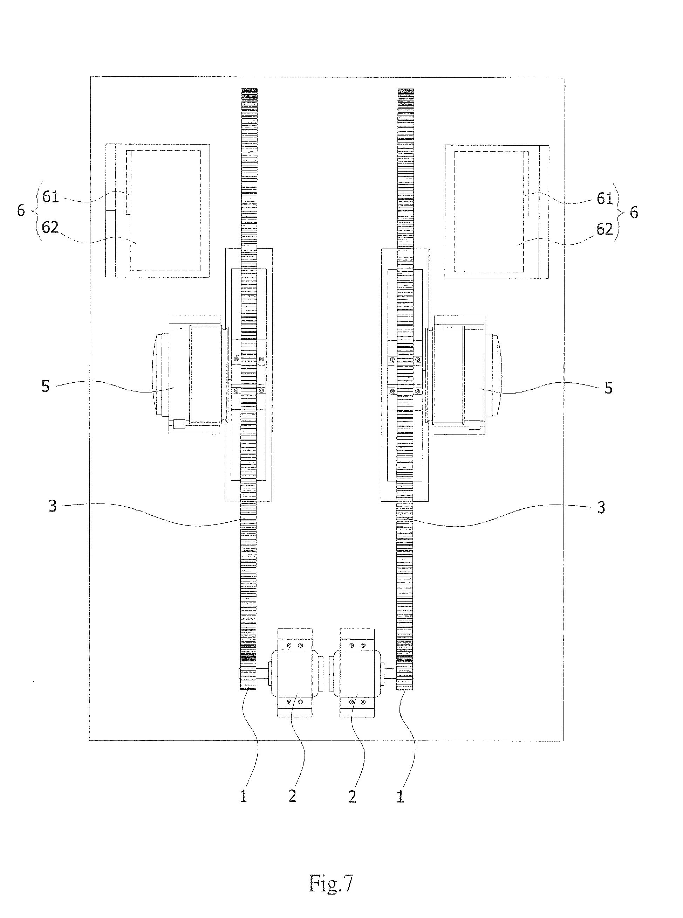

Fig.7: A top view of what is shown in Fig.5.
Fig.8: A working diagram for showing the practicing of the present invention.
Fig.9: The side view for combined applying of multiple sets of the present invention.
Fig.10: A 3-D diagram of the present invention connected with the gear set.

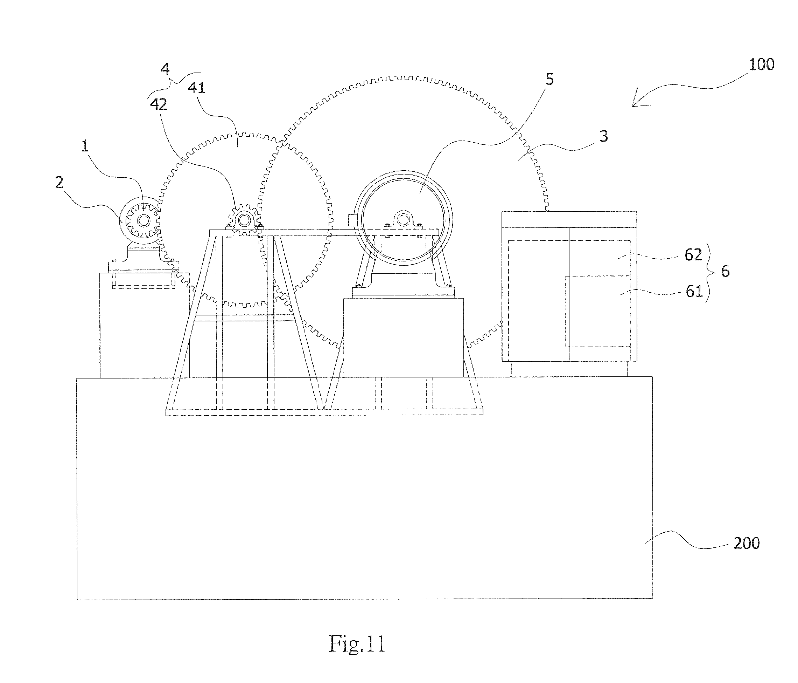

Fig.11: A side view of what is shown in Fig.10.

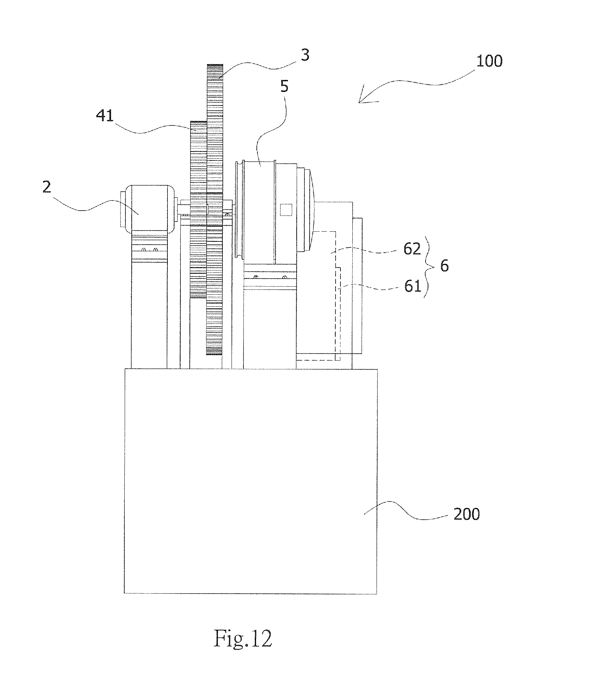

Fig.12: A front view of what is shown in Fig.10.

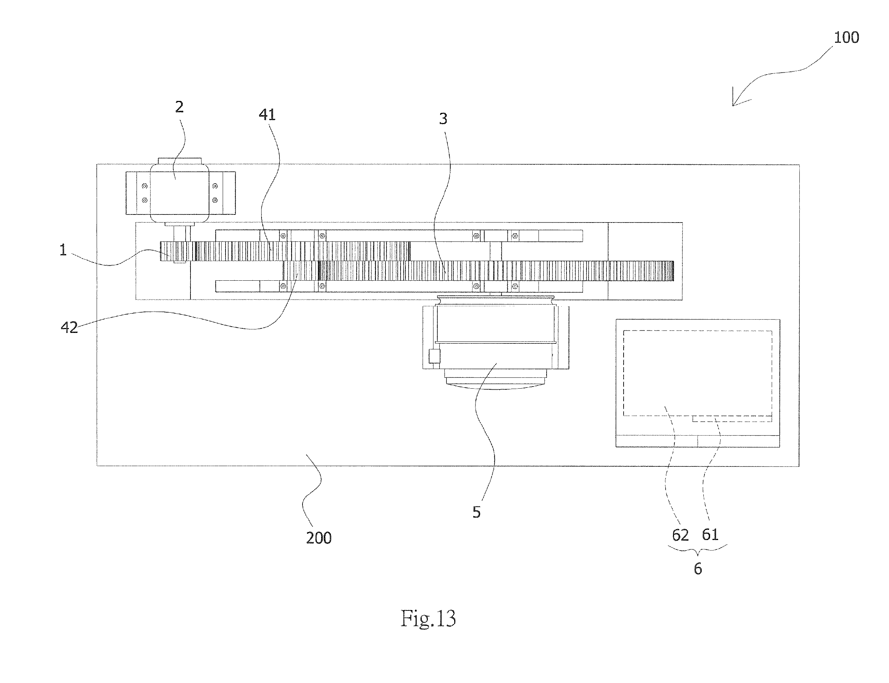

Fig.13: A top view of what is shown in Fig.10.
Fig.14: An operating principle diagram of the power-multiplying mechanism.

### DETAILED DESCRIPTION OF PREFERRED EMBODIMENT

In order to make the effects of the present invention's advantages compare to prior arts become more clear, detailed description with figures of the present invention are as follows:

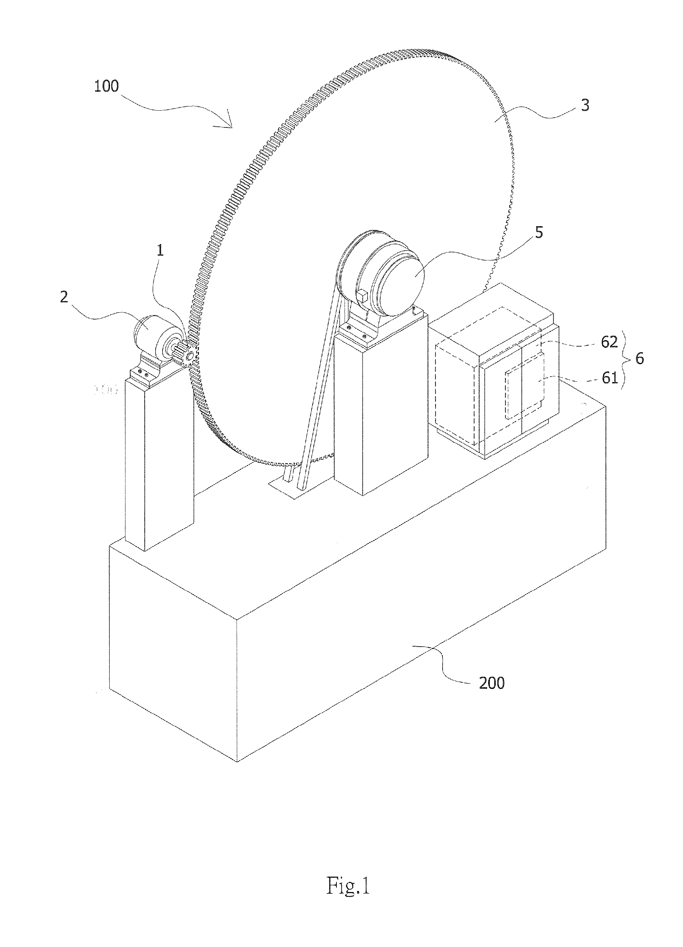

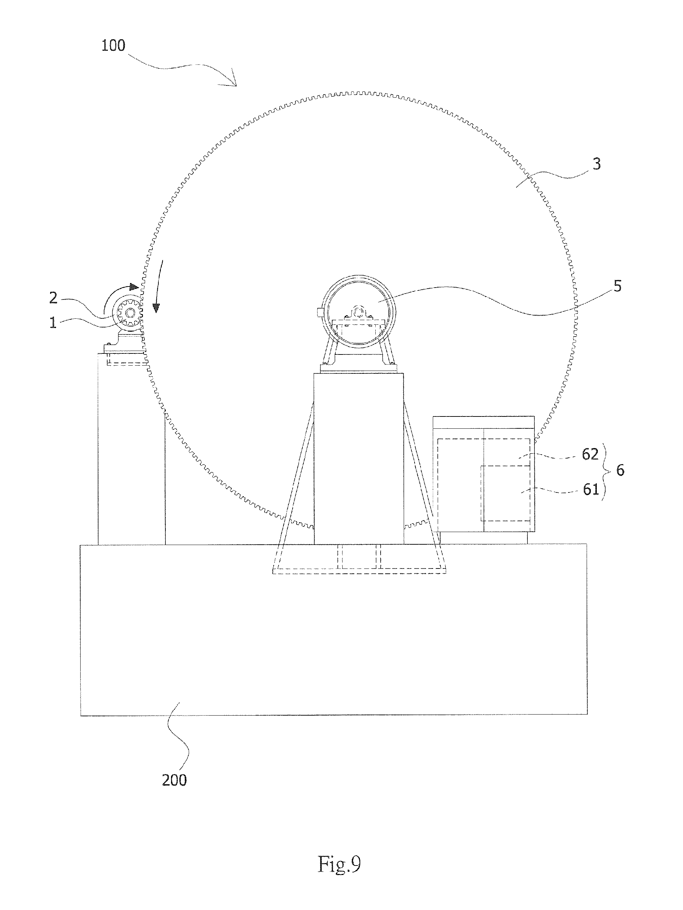

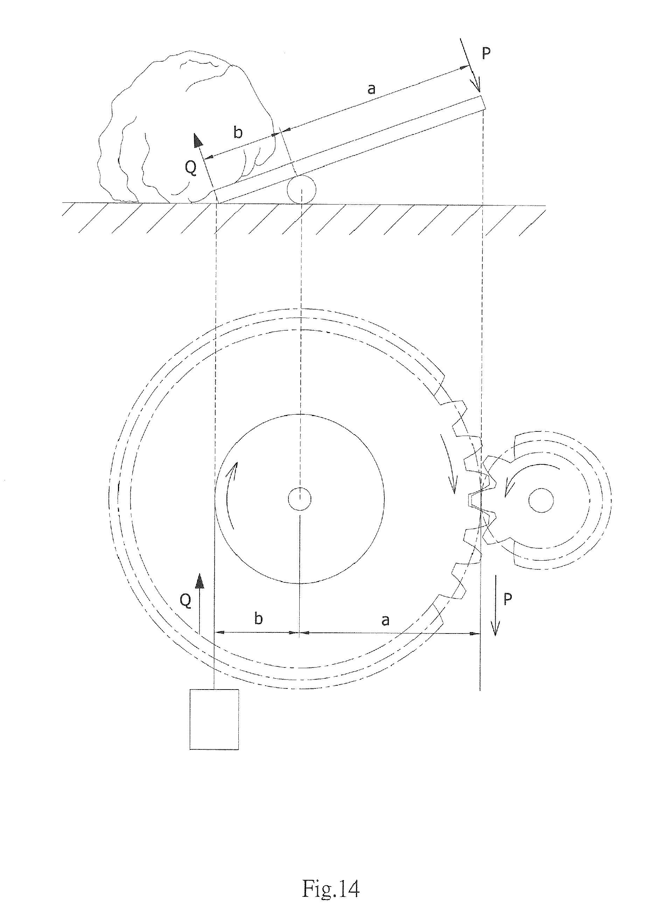

Figs.1∼4, Fig.9 and Fig. 14 reveal an eco-friendly electric generating apparatus with power-multiplying gear mechanisms, which comprising:
At least one electric-generating apparatus (100), and
At least one base (200) that is used to support and store said electric-generating apparatus (100).

Said apparatus (100) is activated by:
A drive gear (1) disposed on said base (200).
A driving motor (2), which is disposed on the base (200), and connected to said drive gear (1) by axis for propelling said drive gear (1) on the base (200).
A transmission gear (3), which is disposed on the base (200) that can be driven by said drive gear (1), as its teeth outnumber said drive gear's (1).
A generator (5), which is disposed on the base (200) that is connected to and propelled by said transmission gear (3) on the base (200) by axis, to generate electricity simultaneously.
A control box (6) is electronically connected with the driving motor (2) and generator (5) to control their operations.

Through the applications of the drive gear (1) and the transmission gear (3), the present invention is active by the Law of the Lever. According to Fig.14, P serves as the effort force, a as the effort arm lever, Q as the resistance force, and b as the resistance arm lever. The formula is Pa=Qb, Q/P=a/b, thus, when the ratio of a: b is 10, Q=10P, the output power to the generator (5) would be 10 times multiplied, therefore increasing the amount of electricity generated.

For example, assuming the teeth number of the drive gear (1) as 12, the transmission gear's (3) teeth number as 240, when performing the engagement turning, and the transmission gear's (3) power-multiplying is calculated by half of the transmission gear's (3) teeth number - 120, the output power would multiply by 10. Thus, 20 HP of input power from the driving motor (2), the output power of the present invention would increase to 200 HP to activate the generator (5).

Therefore, by simply adjusting the gear teeth ratio and power output of the driving motor (2) to fit the market's needs, the electricity generated by the present invention can selectively reach 50 kilowatts, 110 kilowatts, 150 kilowatts, 200 kilowatts, 300 kilowatts, 500 kilowatts, 1000 kilowatts, or even 2000 kilowatts etc.

A First advantage of the present invention is that neither fuel nor energy supply is required when generating electricity once the multiplying mechanism is activated. A small part of its self-made energy would be recycled to drive the driving motor (2), which makes the energy produced by present invention become a green energy.

A Second advantage of the present invention is that there is no area restriction for installing, which makes the present invention capable of being installed in the places with smaller areas then what is needed by conventional power generating facilities.

Said control box (6) includes an internal circuit control board (61) that is electronically-connected with the driving motor (2) and the generator (5), which is **characterized in that**:
A storage battery set (62) that is electronically-connected with and controlled by the circuit control board (61) to supply electricity to the driving motor (2) and the load as well as receive electricity generated from said generator (5) simultaneously.

Through the cooperation of the circuit control board (61) and the storage battery set (62), the electricity generated by the present invention is capable of being effectively saved for future use.

The above-mentioned generator (5) is actually a generator with low rotating speed.

The application of the generator with low rotating speed allows the present invention to generate electricity more effectively, improving its generating efficiency.

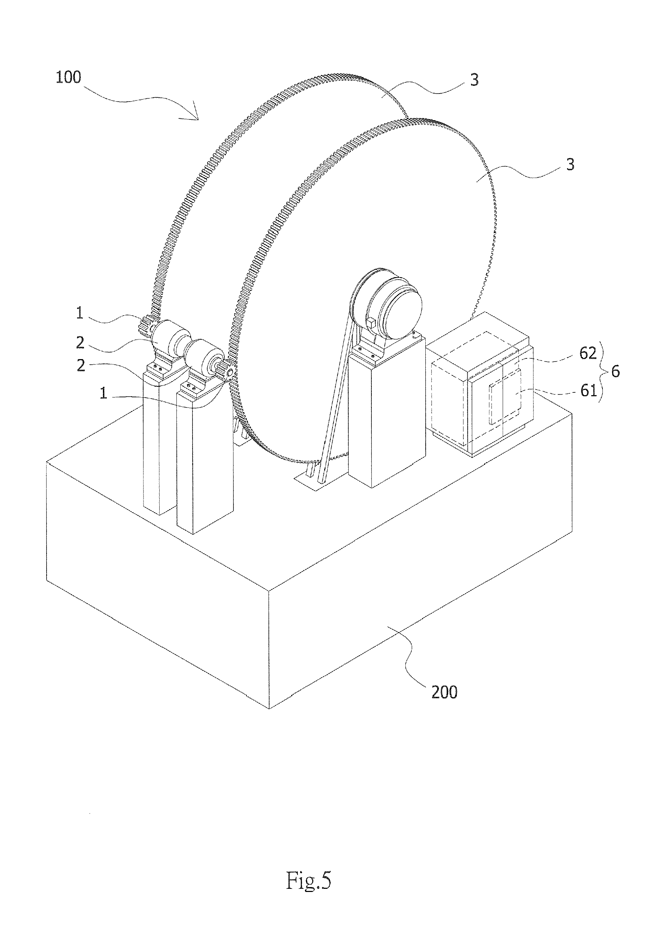

Figs.5∼7 reveals that the present invention's structure is not complicated, and also has a high efficiency with a large electric-generating capability as well as being unaffected by climate elements when present invention is covered. It can generate electricity for 24 hours/day with the power of electricity ranging from 50 kilowatts ∼ 5000 kilowatts, which can be generated by single or multiple devices applied the present invention.

Furthermore, the present invention can operate without producing other noise except water flowing, also with almost no gas-exhausts, thus become completely pollution-free when producing energy. It not only reduces space-consumption, but also reduces the cost at setting it up. The electric-generating apparatus's driving motor (2) applied in present invention, is activated by the battery set's (72) electricity which is saved from the electricity generated by the generator (6), thus, the operating energy of present invention can be cycled to keep operating, and less power supply from extra power source is needed to maintain the operation of present invention.

On the other hand, the present invention's low cost for generating dues to no other costs are required in 20∼30 years since the apparatus' installment, which means all factories, whether large or small, can install a power plant for self-use in case of blackouts and can operate efficiently for 365 days/year, thus saving a large amount of charge in the electric bill, lowering production costs, and simultaneously providing electricity for either a joint-used with else power plants for a village or a large power plant built away from cities or suburbs by business corporations or power companies to sell to households.

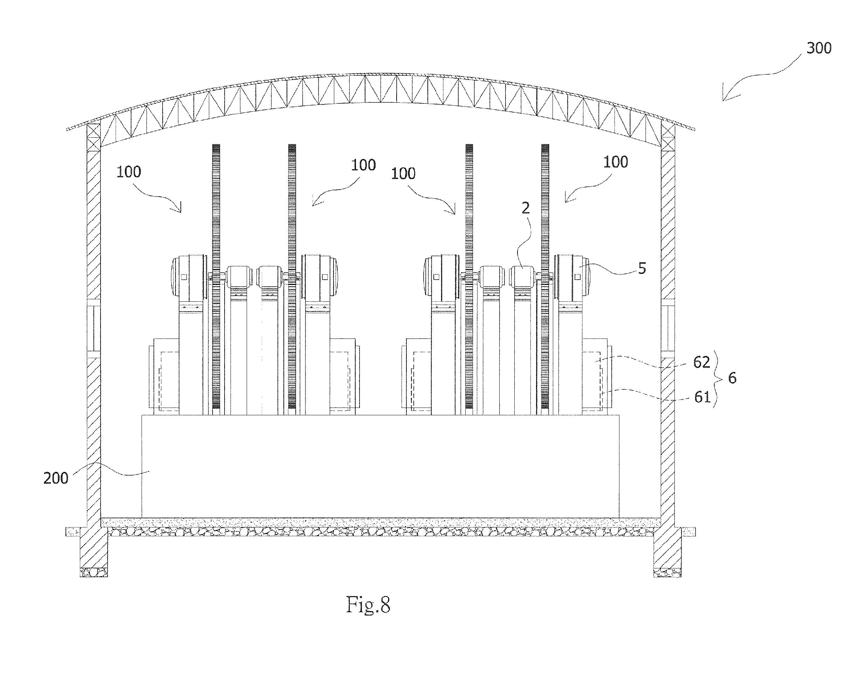

Fig.8 shows that aside from said electric-generating apparatus (100) and base (200), an apparatus of covering structure (400) can be installed for the purpose of covering said electric-generating apparatus (100) and base (200).

Through the cooperation between the base (200) and the apparatus of covering structure (400), the present invention can be effectively protected from climate elements such as typhoons, storms and floods.

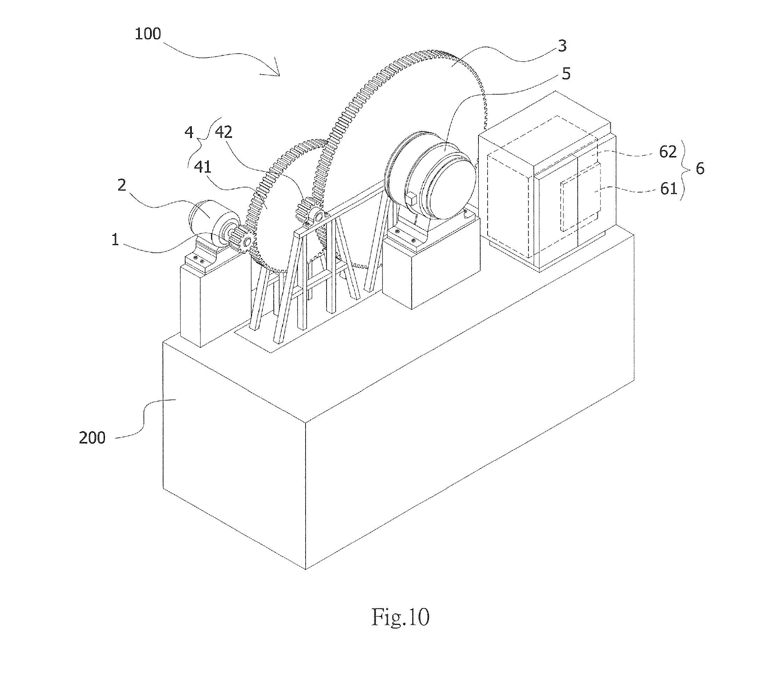

Figs.10∼ 13 shows that at least a gear set (4) that can guide the power released from the drive gear to the transmission gear should be placed between said drive gear (1) and transmission gear (3)

Secondly, the application of the gear set (4) would avoid many problems such as over-large gears that are difficult to produce, install, operate, and costly, as well as simplifying the adjustment of output electricity.

As described above, said gear set (4) includes a first middle gear (41) with more teeth than said drive gear (1) that is engaged with and driven by said drive gear (1), along with

A second middle gear (42) that is connected to the first middle gear (41) by axis, engaged with said transmission gear (3), rotate simultaneously with said first middle gear (41) and drive said transmission gear (3).

Through the cooperation between the first middle gear (41) and second middle gear (42), the power produced by the drive gear can be properly transmitted to the transmission gear (3), to prevent gears from being over-large to assemble and produce.

For example, when the output power of said driving motors 10 horsepower (HP) with a 1200 revolutions-per-minute (r.p.m.), the drive gear's (1) teeth number as 12, the first middle gear's (41) teeth number as 52, the power generated would multiply by 3 times of original output power and the r.p.m. speed decreased to 200 r.p.m.. If the second middle gear's (4) teeth number is 12, the transmission gear's (3) is 120, the power generated in each round of said would multiply by 5 times of original output power, with the total generated power to operate the generator is amounting to 15 times of original output power. Using the motor at 20 hp and 2400 r.p.m. would become 300 hp and the speed reduced to 40 r.p.m., which is the minima rotating speed to operate. Producing electricity that is more eco-friendly, safer and cheaper than conventional generator.

Conclude all aforementioned descriptions, the present invention requires almost no fuel for generating electricity, and can use recycled energy to stay operating and provide sufficient and stable electricity. The total cost of generating electricity is cheap with the apparatus easy to be applied with, making it acceptable to the demands of green energy producing by being eco-friendly, making little noise, no gas-exhaust and absolutely pollution-free with a high power generating efficiency. Comparing to traditional electric-generating apparatuses, the present invention is more efficient, more applicable, and more potential for industrial application.

## Claims

1. An eco-friendly electric-generating apparatus with power-multiplying gear mechanisms, comprising:
At least one electric-generating apparatus (100), and
At least one base (200) that is used to support and store said electric-generating apparatus (100);
Said apparatus (100) is activated by:
A drive gear (1) disposed on said base (200);
A driving motor (2), which is disposed on said base (200), and connected to said drive gear (1) by axis for propelling said drive gear (1) on said base (200);
A transmission gear (3), which is disposed on the base (200) that can be driven by said drive gear (1), as its teeth are more than said drive gear's (1);
A generator (5), which is disposed on the base (200) that is connected to and propelled by said transmission gear (3) on the base (200) by axis to generate electricity simultaneously;
A control box (6) is electronically connected with the driving motor (2) and generator (5) to control their operations.

2. The eco-friendly electric generating apparatus with power-multiplying gear mechanisms as described in Claim 1, wherein aside of said electric-generating apparatus (100) and base (200), an apparatus of covering structure (400) can be built to completely cover said electric-generating apparatus (100) and base (200).

3. The eco-friendly electric-generating apparatus with power-multiplying gear mechanisms as described in Claim 1, wherein said control box (6) includes an internal circuit control board (61) that is electronically-connected with the driving motor (2) and the generator (5), **characterized in that**:
A storage battery set (62) that is electronically-connected with and controlled by the circuit control board (61) to supply electricity to the driving motor (2), and the load of the generator (5) also receives electricity generated from said generator (5) simultaneously.

4. The eco-friendly electric-generating apparatus with power-enlarging gear mechanisms, as described in Claim 1, wherein said generator (5) is a generator with low rotating speed.
